# EUROPÄISCHE PATENTSCHRIFT

(11) **EP 0 877 179 B1**
(45) Veröffentlichungstag und Bekanntmachung des Hinweises auf die Patenterteilung: **01.08.2001**
(21) Anmeldenummer: 98106955.2
(22) Anmeldetag: 16.04.1998
(51) Int. Cl.: F16H 7/08

(54) **Gleitschiene für Kettentrieb**
Chain guide
Guide-chaîne

(30) Priorität: 09.05.1997 DE 19719732
(43) Veröffentlichungstag der Anmeldung: 11.11.1998
(73) Patentinhaber: Dr.Ing.h.c. F. Porsche Aktiengesellschaft, 70435 Stuttgart (DE)
(72) Erfinder: Marchart, Horst, 70374 Stuttgart (DE)

(56) Entgegenhaltungen:
- EP-A- 0 193 802
- DE-C- 3 706 136
- GB-A- 725 984

## Beschreibung

Die Erfindung bezieht sich auf eine Gleitschiene nach dem Oberbegriff des Patentantspruchs 1.

Eine bekannte Gleitscheine - FR-PS 1 408 575 - umfaßt eine Gleitfläche, die sich über die gesamte Länge der besagten Gleitschiene erstreckt.

Eine gattungsgemäβe Gleitschiene ist aus der EP-A-193802 bekannt. Die Gleitfläche besteht aus verschiedenen aneinander liegenden Segmenten.

Aufgabe der Erfindung ist es, diese Gleitschiene bezüglich Gewicht und Werkstoffeinsatz zu optimieren.

Erfindungsgemäß wird diese Aufgabe durch die Merkmale des Patentanspruchs 1 gelöst. Weitere, die Erfindung ausgestaltende Merkmale sind in den nachfolgenden Ansprüchen enthalten.

Die mit der Erfindung hauptsächlich erzielten Vorteile sind darin zu sehen, daß die Gleitabschnitte eine funktionsgerechte Kettenführung sichern und der Ausschnitt zur Gewichts- und Werkstoffeinsatz-Reduktion beiträgt.

In der Zeichnung ist ein Ausführungsbeispiel bezeigt, das nachstehend näher bezeichnet ist.

Es zeigt:
- Fig. 1: Einen Kettentrieb zwischen einer Kurbelwelle und einer Nockenwelle einer Brennkraftmaschine mit der erfindungsgemäßen Gleitschiene,
- Fig. 2: einen Schnitt nach der Linie II-II der Fig. 1 in größerem Maßstab,
- Fig. 3: einen Schnitt nach der Linie III-III der Fig. 1.

Von einer Brennkraftmaschine 1 wird lediglich eine Kurbelwelle 2 und eine Nockenwelle 3 gezeigt. Letztere ist in einem nicht dargstellten Zylinderkopf gelagert und betätigt Ventile der Brennkraftmaschine 1. An der Kurbelwelle 2 und der Nockenwelle 3 sind Kettenräder 4 bzw. 5 angebracht, die mit einer Kette 6 einen Kettentrieb 7 bilden.

Die Kurbelwelle 2 dreht sich im Uhrzeigersinn, so daß am Kettentrieb 7 bei 8 das Lasttrum ist; das Lostrum ist mit 9 bezeichnet.

Am Lasttrum 8 des Kettentriebs 7 liegt eine Gleitschiene 10 an, die aus Metall, Kunststoff oder dgl. bestehen kann und mit einer Gleitfläche 11 aus reibfestem Kunststoff oder Kautschuk versehen ist. Die Gleitfläche 11 umfaßt zwei beabstandete Gleitabschnitte 12, 13, zwischen denen ein Ausschnitt 14 vorgesehen ist.

Im Ausführungsbeispiel umfaßt die Gleitschiene 10 einen Träger 15 aus hochbelastbarem Polyamid mit Faserzusätzen, wogegen die an diesem Träger 15, und zwar an den Gleitabschnitten 12, 13 angebrachte Beläge 16, 17 aus Polyamid ohne Faserzusätze bestehen.

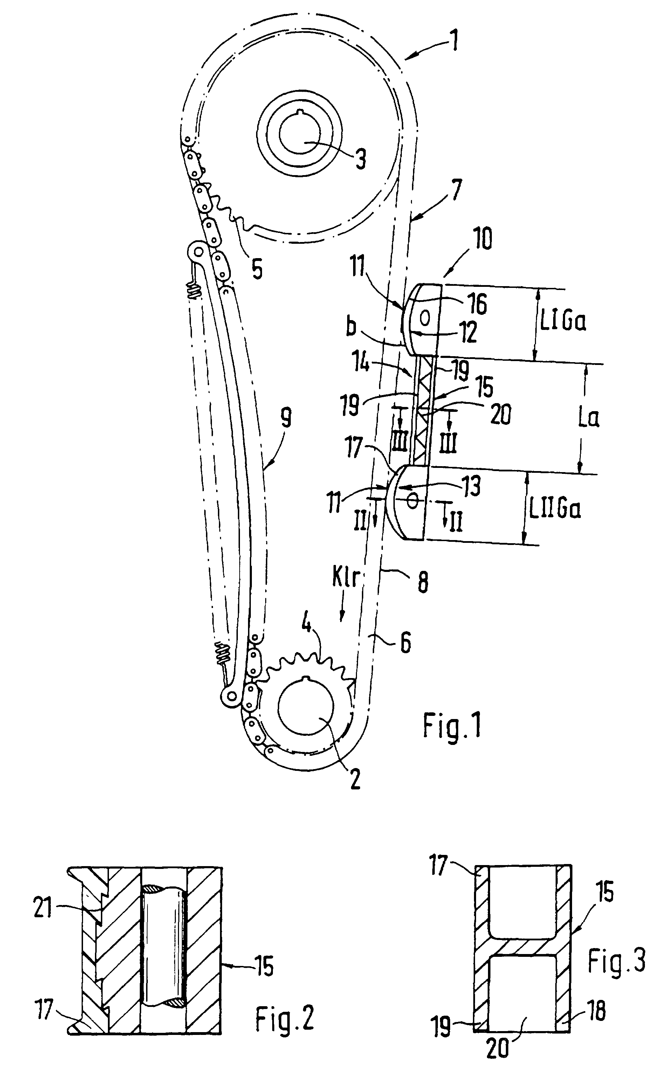

Der Ausschnitt 14 hat eine U-förmige Gestalt, und die Gleitabschnitte 12, 13 können in Kettenlaufrichtung - Klr - auf der der Kette 6 zugekehrten Seite ballig - Formverlauf 6 ausgeführt sein. Der Träger 15 weist im Bereich des Ausschnitts 14 einen doppel-T-förmigen Querschnitt auf - Fig. 3 -, wobei beabstandete Stege 18, 19 durch Rippen 20 - gitterträgerartig - abgestützt sind. Die Längen LIGa und LIIGa der Gleitabschnitte 12 sowie La des Ausschnittes 14 können rechnerisch oder iterativ definiert werden.

Die Beläge 16, 17 sind lediglich im Bereich der Gleitabschnitte 12, 13 vorgesehen und arbeiten mit dem Träger 15 über hintereinandergreifende Verbindungen 18, 19, z.B. Schwalbenschwanzbauart, zusammen (Fig. 2). Dabei wird der Träger 15 zunächst im Spritzgußverfahren hergestellt. Danach werden in einem weiteren Verfahrensgang die Beläge 16, 17 ebenfalls im Spritzgußverfahren mit dem Träger 15 vereinigt. Dieses Verfahren wird in der DE 37 06 136 C1 ausführlich beschrieben und hat sich in der Praxis vielfach bewährt.

## Patentansprüche

1. Gleitschiene für einen Kettentrieb endloser Gattung, z.B. zwischen einer Kurbelwelle und einer oder mehrerer Nockenwellen, welche Gleitschiene aus geeignetem Werkstoff, wie Metall, Kunststoff oder dgl. besteht und eine mit der Kette zusammenwirkende Gleitfläche aus reibfestem Kunststoff oder Kautschuk aufweist, wobei die Gleitschiene (11) zwei in Längsrichtung der Kette beabstandete Gleitabschnitte (12, 13) umfaßt, dadurch gekennzeichnet, daß zwischen den Gleitabschnitten die Gleitschiene (11) mit einem Ausschnitt (14) versehen ist.

2. Gleitschiene nach Anspruch 1, dadurch gekennzeichnet, daß die Gleitschiene (11) einen Träger (15) aus Kunststoff umfaßt, an dem die Gleitsabschnitte (12, 13) vorgesehen sind.

3. Gleitschiene nach Anspruch 1, dadurch gekennzeichnet, daß der Ausschnitt (14) U-förmig gestaltet ist.

4. Gleitschiene nach den Ansprüchen 1 und 2, dadurch gekennzeichnet, daß die Gleitabschnitte (12, 13) auf der einer Kette (6) des Kettentriebes (7) zugekehrten Seite aus reibfestem und dämpfenden Eigenschaften aufweisendem Werkstoff, wie Kautschuk, Elastomere oder dgl. bestehen.

5. Gleitscheine nach einem oder mehreren der vorangehenden Ansprüche, dadurch gekennzeichnet, daß die Gleitabschnitte (12, 13) Beläge (16, 17) sind, die über hintereinandergreifende Verbindungen (21) mit dem Träger (15) zusammenarbeiten.

6. Gleitschiene nach einem oder mehreren der vorangehenden Ansprüche, dadurch gekennzeichnet, daß die Beläge (16, 17) lediglich im Bereich der Gleitabschnitte (12, 13) vorgesehen sind.

## Claims

1. A slide rail for a chain drive of the continuous type, for example between a crankshaft and one or more camshafts, which slide rail consists of a suitable material, such as metal, plastics material or the like, and has a slide face of wear-resistant plastics material or rubber cooperating with the chain, wherein the slide rail (11) comprises two slide portions (12, 13) spaced in the longitudinal direction of the chain, **characterized in that** the slide rail (11) is provided with an opening (14) between the slide portions.

2. A slide rail according to Claim 1, **characterized in that** the slide rail (11) comprises a support (15) of plastics material on which the slide portions (12, 13) are provided.

3. A slide rail according to Claim 1, **characterized in that** the opening (14) is U-shaped.

4. A slide rail according to Claims 1 and 2, **characterized in that** on the side facing a chain (6) of the chain drive (7) the slide portions (12, 13) consist of wear-resistant material having damping characteristics, such as rubber, elastomers or the like.

5. A slide rail according to one or more of the preceding Claims, **characterized in that** the slide portions (12, 13) are linings (16, 17) cooperating with the support (15) by way of interlocking connexions (21).

6. A slide rail according to one or more of the preceding Claims, **characterized in that** the linings (16, 17) are provided only in the region of the slide portions (12, 13).

## Revendications

1. Glissière pour un mécanisme à chaîne de type sans fin, par exemple entre un vilebrequin et un ou plusieurs arbres à cames, laquelle glissière est faite d'une matière appropriée telle qu'un métal, une matière plastique ou similaire, et présente une surface de glissement en matière plastique résistant à la friction ou en caoutchouc, qui coopère avec la chaîne, la glissière (11) comprenant deux portions de glissement (12, 13), espacées dans la direction longitudinale de la chaîne, caractérisée en ce que la glissière (11) est pourvue d'une découpe (14) entre les portions de glissement.

2. Glissière selon la revendication 1, caractérisée en ce que la glissière (11) comprend un support (15) en matière plastique sur lequel sont prévues les portions de glissement (12, 13)

3. Glissière selon la revendication 1, caractérisée en ce que la découpe (14) est en forme de U.

4. Glissière selon les revendications 1 et 2, caractérisée en ce que les portions de glissement (12, 13) sont constituées, sur le côté tourné vers une chaîne (6) du mécanisme à chaîne (7), d'une matière plastique résistant à la friction et qui présente des propriétés d'amortissement, telle que du caoutchouc, des élastomères ou similaires.

5. Glissière selon une ou plusieurs des revendications précédentes, caractérisée en ce que les portions de glissement (12, 13) sont des garnitures (16, 17) qui coopèrent avec le support (15), par l'intermédiaire de raccords (21) passant les uns derrière les autres.

6. Glissière selon une ou plusieurs des revendications précédentes, caractérisée en ce que les garnitures (16, 17) sont prévues uniquement dans la zone des portions de glissement (12, 13).
